# EUROPÄISCHE PATENTSCHRIFT

(11) **EP 2 100 092 B1**
(45) Veröffentlichungstag und Bekanntmachung des Hinweises auf die Patenterteilung: **23.06.2010**
(21) Anmeldenummer: 07856417.6
(22) Anmeldetag: 06.12.2007
(51) Int. Cl.: G01B 11/06, G01B 11/245, G01B 15/02, G01B 21/08

(54) **VERFAHREN UND VORRICHTUNG ZUR DICKENMESSUNG**
METHOD AND DEVICE FOR THICKNESS MEASUREMENT
PROCÉDÉ ET DISPOSITIF DE MESURE D'ÉPAISSEUR

(30) Priorität: 15.12.2006 DE 102006059415
(43) Veröffentlichungstag der Anmeldung: 16.09.2009
(73) Patentinhaber: Fraunhofer-Gesellschaft zur Förderung der angewandten Forschung e.V., 80686 München (DE)
(72) Erfinder: SCHMITT, Peter, 91058 Erlangen (DE); KOSTKA, Günther, 91056 Erlangen (DE)
(74) Vertreter: Schenk, Markus
(86) Internationale Anmeldenummer: PCT/EP2007/010612
(87) Internationale Veröffentlichungsnummer: WO 2008/071337

(56) Entgegenhaltungen:
- WO-A-91/08439
- FR-A- 1 312 164
- GB-A- 2 046 900
- JP-A- 60 164 202
- JP-A- 2004 037 253

## Beschreibung

Die vorliegende Erfindung befasst sich mit der Dickenmessung von ausgedehnten geometrischen Objekten und insbesondere damit, wie die Dicke von in Bahnen hergestellten Materialien, wie Blechen, Folien oder Papier effizient bestimmt werden kann.

Bei der Dickenmessung von geometrisch ausgedehnten Objekten ergeben sich eine Reihe von Problemen, insbesondere wenn, wie beispielsweise bei industriell vorgefertigten Blechen, die Dicke der zu untersuchenden Objekte in einem weiten Bereich variieren kann, wie beispielsweise von 0,01 mm bis zu mehreren Zentimetern. Ist dabei die geometrische Ausdehnung relativ zur Dicke der Objekte groß oder in einer Richtung sogar annäherungsweise unendlich, wie beispielsweise bei auf Rollen aufgewickelten Materialien wie Folien, Papier oder Blechen, besteht das Problem, dass die Dicke einer großen Fläche des Objekts mit einer einzigen Messung bestimmt werden muss, um die gesamte Messdauer auf einem akzeptablen Niveau zu halten. Zusätzlich ergibt sich das Problem, dass gerade bei den Materialien, die in Form von Bahnen produziert werden, der Anspruch an die Toleranz der Dicke der Bahn typischerweise besonders groß ist. Beispielsweise werden im Automobilbau die Blechstärken teilweise mit äußerst geringen Toleranzen spezifiziert, da die Einhaltung der Blechstärke für das Crash-Verhalten der fertig montierten Fahrzeuge wesentlich ist. Bei der Kontrolle von Blechdicken ist darüber hinaus zu beachten, dass Bleche in Walzwerken typischerweise in hoher Geschwindigkeit produziert werden, so dass pro Zeiteinheit eine große Blechfläche überprüft werden muss. Unter anderem kommen auch industrielle Walzmaschinen zum Einsatz, die Bleche mit einer Breite von bis zu 3 Metern erzeugen können. Darüber hinaus besteht ein Blech aus einem für herkömmliche optische Strahlung undurchlässigen Material, was die Messung der Blechstärke zusätzlich erschwert. Taktile Verfahren, die ortsaufgelöst durch direkte Berührung der Blechoberflächen deren Dicke bestimmen können, kommen für einen solchen Einsatz kaum in Frage, da diese eine Vielzahl von Messpunkten mechanisch erfassen müssten, was den Aufwand und somit die Kosten für die Qualitätskontrolle erheblich erhöhen würde. Bei industriellen Herstellungsverfahren werden Bleche oftmals so schnell erzeugt, dass diese am Ausgang einer Walzvorrichtung mit so hoher Geschwindigkeit austreten, dass diese Bleche in einer Richtung senkrecht zur Oberfläche Schwingungen durchführen. In solchen Fällen ist die Anwendung taktiler Verfahren prinzipiell nicht möglich. Ähnliche Überlegungen treffen neben Blechen für eine Vielzahl anderer ebener Materialien zu, wie beispielsweise Folien, Papier, Gläser oder ähnlichem, für die die Einhaltung einer spezifischen Materialstärke mit hoher Genauigkeit gefordert wird.

Aufgrund der oben skizzierten Probleme ist die Überwachung der Wandstärke während der Produktion äußerst aufwändig, bei Blechen erfolgt sie in der Regel radiometrisch, d. h. unter Verwendung von radioaktiven Quellen oder Röntgenröhren um Röntgenstrahlung zu erzeugen und auf radioaktive Strahlen bzw. auf Röntgenstrahlen sensitiven Detektoren. Dabei wird das zu prüfende Material mit Röntgenstrahlung oder Gamma-Strahlung durchleuchtet und die Wandstärke des durchleuchteten Materials wird durch die Strahlschwächung, die durch die Absorption der Strahlung im zu überprüfenden Material hervorgerufen wird, bestimmt. Dazu muss die Strahlintensität bzw. die ursprüngliche Strahlungsintensität bekannt sein und die nach dem Durchleuchten des Materials verbleibende Strahlungsintensität muss mittels geeigneter Detektoren nachgewiesen werden. Strahlungsempfindliche Detektoren sind im Allgemeinen äußerst aufwändige Apparate. Beispielsweise werden momentan üblicherweise Zählrohre eingesetzt, also Gas gefüllte, mit Hochspannung beaufschlagte Detektorrohre, da diese relativ langzeitstabil sind und eine geringe Drift (beispielsweise temperaturinduziert) aufweisen. Bei der Überwachung der Produktion von breiten Blechen, müssen teilweise bis zu 100 solcher Detektoren und gegebenenfalls mehrere Röntgenquellen eingesetzt werden, um über die gesamte Breite der bis zu 3 m breiten Bleche die erforderliche Ortsauflösung bzw. Empfindlichkeit der Dickenmessung zu erreichen. Dabei liegen realistisch erzielbare Messgenauigkeiten im Bereich von 0,1 % der Wandstärke, somit bei beispielsweise 10 mm dicken Blechen etwa bei 10 µm. Ein evidenter Nachteil besteht dabei in den hohen Kosten, die eine solche Messapparatur mit sich bringt. Beispielsweise muss für jedes der Zählrohre einen Hochspannungskanal einer Hochspannungsversorgung und ein Auslese- bzw. Auswertkanal einer Signalverarbeitungselektronik bereitgehalten werden.

Ein weiterer Nachteil besteht darin, dass die erzielbare Messgenauigkeit durch die Statistik der Röntgenstrahlung (Poisson-Statistik) bestimmt wird. Der Signal-Rausch-Abstand wird daher durch die Quadratwurzel der detektierten Röntgenquanten bestimmt. Bei gegebener zur Verfügung stehender Messzeit ist daher die Ortsauflösung bzw. die Dickenempfindlichkeit begrenzt. Obwohl prinzipiell die Messgenauigkeit durch längere Messdauer bzw. Integrationszeit erhöht werden kann, ist dies im industriellen Maßstab nicht beliebig möglich, da in endlicher Zeit das aus einer Produktionsstraße kommende Material überprüft werden muss. Die prinzipiell auch mögliche Erhöhung der Aktivität der verwendeten Röntgenquellen erhöht auch das Risiko bei einem Strahlungsunfall und kann somit nur bedingt dazu beitragen, die Geschwindigkeit der Messung bzw. die erzielbare Messgenauigkeit zu steigern.

Für den Einsatz in Verbindung mit ausgedehnten Materialien, wie beispielsweise Blech-Rollen ist darüber hinaus das Röntgenverfahren deswegen nur bedingt geeignet, da die typischen Detektoren (Zählrohre) die kommerziell erhältlich sind, eine Ausdehnung von lediglich einigen Zentimetern aufweisen, so dass, wie bereits oben erwähnt, eine Vielzahl solcher Detektoren verwendet werden muss. Zusätzlich wird die erzielbare Ortsauflösung durch die endliche Ausdehnung der Zählrohre stark begrenzt, da ein einzelnes Zählrohr jeweils nur die Existenz eines Gamma-Quants in der von ihm überdeckten Fläche nachweisen kann, wobei eine weitere Differenzierung des Ortes des Gamma-Quants innerhalb des Zählrohrs nicht möglich ist.

Die dem Stand der Technik entsprechenden Röntgenverfahren haben also den Nachteil, nur eine begrenzte Ortsauflösung erzielen zu können, sowie Detektoren zu verwenden, deren Anschaffung und Betrieb äußerst aufwändig und kostenintensiv ist.

Die britische Patentanmeldung GB 2 046 900 beschreibt wie die Dicke eines Gewebes bestimmt werden kann, bei dem sowohl opto-elektronische Sensoren als auch Röntgen-Sensoren verwendet werden. Dabei werden punktförmige opto-elektronische Abstands-Sensoren sowie punktförmige Röntgen-Sensoren verwendet. Ein Dickenmesssignal des Röntgen-Sensors wird mit einem Kontrollsignal des opto-elektronischen Dicken-Sensors korrigiert.

Die japanische Patentanmeldung JP 2004-037253 beschreibt ein Verfahren, wie mittels ein-dimensionalen opto-elektronischen und Röntgen-Senoren die Messgenauigkeit eines opto-elektronischen Abstands-Sensors verbessert werden kann, wenn thermische Einflüsse, die zu einer Langzeit-Drift des opto-elektronisch ermittelten Abstands- bzw. Dicken-Signals eines zu untersuchenden Objekts durch die Dickensignale des Röntgen-Sensors korrigiert werden. JP - A - 60 164 202 beschreibt eine Messvorrichtung zur Bestimmung der Materialstärke eines Objekts mit:
einer ersten Abstandmesseinrichtung zum Bestimmen eines ersten Abstands zwischen der ersten Abstandsmesseinrichtung und einer der ersten Abstandsmesseinrichtung zugewandten ersten Hauptoberfläche des Objekts in Messrichtung;
einer zweiten Abstandsmesseinrichtung zum Bestimmen eines zweiten Abstands zwischen der zweiten Abstandsmesseinrichtung und einer der ersten Hauptoberfläche gegenüberliegenden zweiten Hauptoberfläche des Objekts in Messrichtung;
einer bezüglich der ersten und der zweiten Abstandsmesseinrichtung in räumlich fester Orientierung und bekannter geometrischer Lage angeordneten Röntgeneinrichtung, um aus der entlang einer Röntgenrichtung durch das Objekt verursachten Abschwächung von Röntgenstrahlung auf eine Materialstärke des Objekts in der Röntgenrichtung zu schliessen; und
einer Auswerteeinrichtung zum Bestimmen der Materialstärke des Objekts zwischen der ersten Hauptoberfläche und der zweiten Hauptoberfläche unter Verwendung des ersten Abstands, des zweiten Abstands und der Materialstärke.

Die internationale Patentanmeldung WO 91/08439 beschreibt ein Lichtschnittmessverfahren, mit dem die Oberflächenkontur ausgedehnter drei-dimensionaler Objekte bestimmt werden kann. Um die Messgenauigkeit zu erhöhen, schlägt die WO 91/ 08439 vor, in zyklischen Abständen ein Eichobjekt vorbekannter geometrischer Ausdehnung mit dem Lichtschnittmess-Sensor bzw. dem Lichtschnittmess-System zu vermessen, um so eine Kalibrierung des Systems durchzuführen.

Die Aufgabe der vorliegenden Erfindung besteht daher darin, eine Vorrichtung und ein Verfahren zu schaffen, mit dem die Bestimmung der Materialstärke eines Objekts mit höherer Ortsauflösung und effizienter als bisher möglich ist.

Diese Aufgabe wird durch eine Vorrichtung gemäß Patentanspruch 1 und durch ein Verfahren gemäß Patentanspruch 12 gelöst.

Der vorliegenden Erfindung liegt dabei die Erkenntnis zugrunde, dass die Materialstärke ausgedehnter Objekte dadurch effizient bestimmt werden kann, dass zwei Abstandsmesseinrichtungen verwendet werden, wobei eine erste Abstandsmesseinrichtung den Abstand zu einer ersten Hauptoberfläche des Objekts und eine zweite Abstandsmesseinrichtung den Abstand zu einer zweiten Hauptoberfläche des Objektes, die der ersten Hauptoberfläche gegenüberliegt, bestimmt. Werden potentielle Messfehler aufgrund der ausgedehnten Geometrie dadurch vermieden, dass eine Referenzeinrichtung einen Referenzabstand zwischen der ersten Abstandsmesseinrichtung und der zweiten Abstandsmesseinrichtung bestimmt, kann mit hoher Genauigkeit und Geschwindigkeit die Dicke des Objekts zwischen der ersten Hauptoberfläche und der zweiten Hauptoberfläche bestimmt werden.

Dabei kommen bevorzugt Detektoren bzw. Abstandsmesseinrichtungen zum Einsatz, die mittels einer einzigen Messung den Abstand zu einem ausgedehnten Bereich auf der Oberfläche des Objekts bestimmen können. Dies ist beispielsweise bei Anwendung des Lichtschnittverfahrens möglich.

In anderen Worten kann die Dicke eines Bahnmaterials dadurch zu bestimmt werden, dass der Abstand von Ober- und Unterseite des Bahnmaterials zu einem über bzw. unter dem Bahnmaterial angebrachten Detektor bestimmt wird, der beispielsweise eine linienförmige Messung des Abstands ermöglicht. Geeignet ist hierfür beispielsweise das Lichtschnittverfahren. Das Problem der Oberflächenvermessung ausgedehnter Objekte besteht generell darin, dass aufgrund der Ausdehnung (beispielsweise der großen Breiten von Bahnmaterialien) ein mechanischer Aufbau zur Aufhängung der Detektoren über und unter dem Objekt (Bahnmaterial) erforderlich ist. Aufgrund der großen geometrischen Ausdehnung kann nicht sichergestellt werden, dass Vibrationen oder thermische Deformationen das Messergebnis nicht verfälschen, insbesondere, da hochpräzise Messungen im Bereich einiger Mikrometer durchgeführt werden sollen. Solche Vibrationen oder Deformationen könnten daher zu einem Messfehler außerhalb der üblicherweise geforderten Toleranzen führen. Erfindungsgemäß wird diesem Problem dadurch begegnet, dass eine Referenzeinrichtung zum Bestimmen eines Referenzabstands zwischen der ersten Abstandsmesseinrichtung und der zweiten Abstandsmesseinrichtung verwendet wird. Dadurch wird eine etwaige Veränderung des Abstands der beiden Detektoreinrichtungen ober- bzw. unterhalb des Bahnmaterials sowie zusätzlich eine mögliche Verkippung eines oder mehrerer Messköpfe senkrecht zur Messrichtung vermieden. Wird beispielsweise Bahnmaterial vermessen, könnte eine solche Verkippung entlang der Vorschubrichtung des produzierten Bahnmaterials einen zusätzlichen Messfehler verursachen, der erfindungsgemäß korrigiert werden kann.

Bei einem Ausführungsbeispiel der vorliegenden Erfindung wird daher eine erste Lichtschnittmesseinrichtung eingesetzt, um einen ersten Abstand zwischen der ersten Lichtschnittmesseinrichtung und einer ersten Hauptoberfläche eines zu vermessenden Bahnmaterials zu bestimmen. Eine zweite Lichtschnittmesseinrichtung wird verwendet, um einen zweiten Abstand von der zweiten Lichtschnittmesseinrichtung zu einer zweiten, der ersten Hauptoberfläche des Bahnmaterials gegenüberliegenden Hauptoberfläche des Bahnmaterials zu bestimmen. Mittels einer Referenzeinrichtung wird zusätzlich als Referenzabstand der Abstand der ersten Lichtschnittmesseinrichtung von der zweiten Lichtschnittmesseinrichtung in Messrichtung bestimmt. Die Messrichtung ist dabei diejenige Richtung, die zur Dicke des Objekts parallel verläuft, also senkrecht auf den Hauptoberflächen steht.

Bei der vorliegenden Erfindung wird als Referenzeinrichtung zum Bestimmen des Referenzabstands zwischen der ersten und der zweiten Lichtschnittmesseinrichtung bzw. zwischen der ersten und der zweiten Abstandsmesseinrichtung ein Strahlungsdetektor verwendet. Der Strahlungsdetektor bestimmt dabei für eine Position auf der Oberfläche des zu untersuchenden Objekts die Materialstärke desselben durch Messung der durch Absorption verlorenen Strahlungsintensität. Erfindungsgemäß wird im selben Oberflächenbereich von der ersten und der zweiten Lichtschnittmesseinrichtung eine Abstandsmessung des Oberflächenbereichs zur Lichtschnittmesseinrichtung durchgeführt. Aufgrund der radiometrisch bestimmten Dicke des zu untersuchenden Objekts in einem kleinen geometrischen Bereich und der Messung der Abstände der Lichtschnittmesseinrichtungen zu eben diesem Bereich kann als Referenzabstand der genaue Abstand der ersten und zweiten Lichtschnittmesseinrichtung mit hoher Genauigkeit bestimmt werden. Eventuelle thermisch- oder mechanisch- induzierte Abstandsvariationen können somit mit hoher Präzision kompensiert werden.

Der große Vorteil des oben beschriebenen Ausführungsbeispiels der vorliegenden Erfindung besteht dabei darin, dass entgegen dem Stand der Technik, aufwändige und kostenintensive radiometrische Abstandsmessverfahren nur für einen begrenzten Bereich auf der Oberfläche des zu untersuchenden Objekts, bzw. einmal je Abstandsmesseinrichtung, verwendet werden müssen. Dadurch können die Kosten deutlich reduziert werden. Aus den oben genannten Gründen wird darüber hinaus die erzielbare Ortsauflösung des zu vermessenden Dickenprofils mittels des Lichtschnittverfahrens erheblich erhöht.

Zusätzlich wird bei der vorliegenden Erfindung die erzielbare Messgenauigkeit in Dickenrichtung dadurch erhöht, dass eine zweite radiometrische Messung mittels, einer zweiter Röntgeneinrichtung durchgeführt wird, wobei die zweite Röntgeneinrichtung mit der ersten Lichtschnittmesseinrichtung und der zweiten Lichtschnittmesseinrichtung verbunden ist. Die Messung mit der zweiten Röntgeneinrichtung erfolgt entlang einer anderen Röntgenrichtung als mittels der ersten Röntgeneinrichtung, also beispielsweise unter einem anderen Winkel relativ zur Oberfläche des zu untersuchenden Objekts. So kann auf eine eventuelle Verkippung bzw. ein eventuelles geometrisches Misalignment der Lichtschnittmesseinrichtungen geschlossen werden. Dadurch lässt sich auf vorteilhafte Art und Weise die Messgenauigkeit zusätzlich steigern, indem zusätzlich zum Abstand der beiden Lichtschnittmesseinrichtungen auch eine Korrektur auf fehlerhafte relative Ausrichtung in einer weiteren Dimension der beiden Lichtschnittmesseinrichtungen zueinander durchgeführt werden kann.

Gemäß einem Ausführungsbeispiel der vorliegenden Erfindung wird die Messeinrichtung dazu verwendet, die Dicken von Blechen, die von einer Presse produziert werden, unmittelbar nach der Produktion zu überprüfen. Dazu werden die Bleche in einer Vorschubrichtung zwischen der ersten Lichtschnittmesseinrichtung und der zweiten Lichtschnittmesseinrichtung bewegt.

Der große Vorteil des Verwendens von berührungslosen Lichtschnittmesseinrichtungen liegt dabei darin, dass mittels einer einzigen Messung der Abstand des Bahnmaterials bzw. der Blechbahn zum Messkopf über eine Breite von mehr als 1 m linienförmig erfasst werden kann. Das heißt, mittels nur einer einzigen Messung kann ein Höhenprofil senkrecht zur Vorschubrichtung gewonnen werden, das mehr als 1 m Materialbreite beschreibt. Dabei ist zusätzlich die Ortsauflösung im Vergleich zu Strahlungsdetektoren dadurch stark erhöht, dass die die Auflösung in Vorschubrichtung begrenzende geometrische Ausdehnung des projizierten Lichtstreifens in Vorschubrichtung prinzipiell beliebig klein gemacht werden kann. Durch Variation der Vorschubgeschwindigkeit des aus der Presse kommenden Blechmaterials lässt sich somit die Ortsauflösung der Topographie-Information, also der Höheninformation auf der Oberfläche des zu untersuchenden Materials bzw. des Dickenprofils, beliebig variieren.

Zusammenfassend kann also gesagt werden, dass das erfindungsgemäße Verfahren bzw. die erfindungsgemäße Vorrichtung das Potential besitzt, eine höhere Ortsauflösung zu erreichen und insgesamt die Messgeschwindigkeit zu erhöhen, wobei gleichzeitig die Kosten der verwendeten Detektoren gegenüber dem Stand der Technik deutlich gesenkt werden können. Dies wird dadurch erreicht, dass radiometrische Detektoren durch andere Messsysteme ergänzt werden, die Abstände auf einer Linie oder in einem ausgedehnten geometrischen Bereich ermitteln können, wie beispielsweise Lichtschnittverfahren.

Bevorzugte Ausführungsbeispiele der vorliegenden Erfindung werden nachfolgend, Bezug nehmend auf die beiliegenden Zeichnungen, näher erläutert. Es zeigen:
- Fig. 1: ein Ausführungsbeispiel gemäss dem Stand der Technik mit einfacher radiometrischer Bestimmung des Referenzabstands;
- Fig. 2A und 2B: ein Ausführungsbeispiel zur Erfindung mit mehreren Lichtschnittmesseinrichtungen;
- Fig. 3: ein Verfahren zur Bestimmung der Materialstärke eines Objekts; und
- Fig. 4: ein Beispiel zum bekannten Lichtschnittmessverfahren.

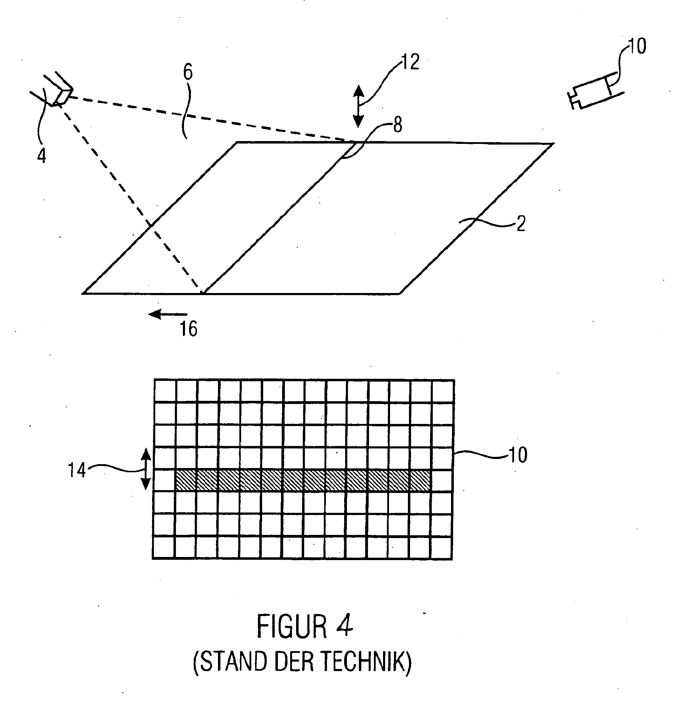

Da in den folgenden Absätzen das erfindungsgemäße Konzept unter Verwendung von Lichtschnittmesseinrichtungen beschrieben wird, soll anhand von Fig. 4 kurz das Lichtschnittmessverfahren an einem einfachen Beispiel beschrieben werden.

Fig. 4 zeigt dabei die Oberfläche eines zu vermessenden Objekts 2 und einen Messlichtprojektor 4, welcher in eine Lichtebene 6 Licht emittiert, so dass auf der Oberfläche des Objekts 2 ein Messlichtstreifen 8 erzeugt wird. Im in Fig. 4 vereinfacht gezeigten Fall einer perfekt ebenen Oberfläche 2 ist der Messlichtstreifen 8 die in Fig. 4 gezeigte Gerade.

Der Messlichtstreifen 8 wird mittels eines geeigneten Sensors 10 aufgezeichnet. Im in Fig. 4 gezeigten Beispiel ist der Sensor 10 ein zwei-dimensionaler Matrixsensor, wie beispielsweise eine CCD- oder ein CMOS-Sensor. Die genaue Art des Sensors ist für die Funktionsweise des erfindungsgemäßen Konzeptes nicht erheblich, es können generell auch andere Arten von Sensoren verwendet werden.

Wird auf der Oberfläche 2 des Objekts eine Messlichtlinie 8 als Gerade erzeugt, wird das Bild der Geraden, wie in Fig. 4 gezeigt, auf dem Sensor 10 abgebildet. Die Höheninformation ergibt sich nunmehr aus der Geometrie des Gesamtaufbaus, insbesondere aus der Relativposition des Sensors 10 und des Messlichtprojektors 4. Wird beispielsweise die Oberfläche 2 des Objekts in einer Richtung 12 bewegt, wird der Messlichtstreifen an anderer Position auf der Oberfläche 2 des Objekts erzeugt, da die Lichtebene 6 im Raum unverändert bleibt. Da auch der Sensor 10 ortsfest ist, wird auch das Bild der Messlichtlinie (symbolisiert durch schwarze Quadrate) auf dem Sensor in einer Richtung 14 variieren. Bei Kenntnis der Geometrie der Lichtebene 6 und des Sensors 10 kann also, wie oben beschrieben, auf die Position der Oberfläche 2 des Objekts in Richtung 12 geschlossen werden.

Äquivalente Überlegungen gelten, wenn die Oberfläche des Objekts nicht eben ist. Mittels des in Fig. 4 gezeigten Lichtschnittverfahrens kann somit Topographie-Information bzw. Höheninformation über die gesamte Breite der Oberfläche 2 mittels einer einzigen Aufnahme des Sensors 10 bestimmt werden.

Es werden für Lichtschnittmessverfahren spezialisierte Sensoren 10 verwendet, die in hoher Geschwindigkeit selbst eine Signalverarbeitung durchführen können, so dass diese beispielsweise lediglich die Information über den hellsten belichteten Pixel des Sensors 10 als Messergebnis zur Verfügung stellen. Solche hoch-spezialisierten Sensoren eignen sich daher insbesondere für eine schnelle Messung, da aufwändige Signalnachverarbeitung, wie sie beispielsweise bei einer herkömmlichen CCD erforderlich wird, vermieden werden kann.

Zusammenfassend weisen Lichtschnittmessverfahren also den erheblichen Vorteil auf, dass mit hoher Geschwindigkeit die Höheninformation entlang einer räumlich ausgedehnten Messlinie 8 erhalten werden kann.

Wird die Oberfläche 2 in einer Richtung senkrecht zur Messlichtlinie 8 und in einer Richtung 16 unter der Lichtebene bewegt und werden sukzessive Aufnahmen mittels des Sensors 10 durchgeführt, kann innerhalb kurzer Zeit die gesamte Topographie der Oberfläche 2 des zu untersuchenden Objekts bestimmt werden, was das Lichtschnittmessverfahren für den Einsatz bei der Vermessung räumlich ausgedehnter Oberflächen prädestiniert.

Bei den im Folgenden beschriebenen Ausführungsbeispielen der vorliegenden Erfindung werden daher zur Illustration des erfindungsgemäßen Konzepts jeweils Lichtschnittmessverfahren verwendet. Das erfindungsgemäße Konzept ist in seiner Anwendung jedoch in keinster Weise auf das verwendete Lichtschnittmessverfahren beschränkt. Vielmehr können jedwede anderen Messverfahren, die die Topographie einer Oberfläche durch Abstandsmessung vermessen können, erfindungsgemäß verwendet werden.

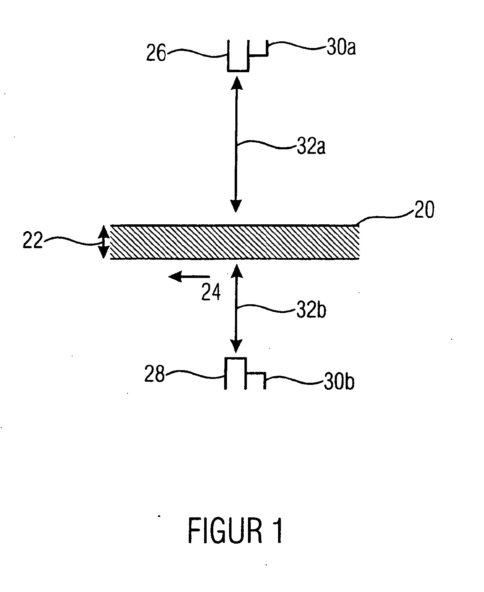

Fig. 1 zeigt ein Ausführungsbeispiel der vorliegenden Erfindung, bei dem der Referenzabstand mittels einer radiometrischen Messung bestimmt wird. Fig. 1 zeigt schematisch in einer Schnittansicht ein zu vermessendes Objekt 20, dessen Materialstärke 22 (d) bestimmt werden soll, wobei das Objekt 20 in einer Richtung 24 zwischen einer ersten Abstandsmesseinrichtung 26 und einer zweiten Abstandsmesseinrichtung 28 bewegt werden kann. Fig. 1 zeigt zusätzlich eine Referenzeinrichtung, die eine Röntgenquelle 30a und einen Röntgendetektor 30b umfasst, wobei die Röntgenquelle 30a bezüglich der ersten Abstandsmesseinrichtung 26 und der Röntgendetektor 30b bezüglich der zweiten Abstandsmesseinrichtung 28 in bekannter geometrischer Lage angeordnet sind. Dies kann beispielsweise auch bedeuten, dass diese mechanisch verbunden sind. Für die Funktionsweise des erfindungsgemäßen Konzepts ist es unerheblich, mit welchem der beiden Abstandsmesseinrichtungen die Röntgenquelle 30a verbunden ist, eine spiegelbildliche Konfiguration ist daher ebenfalls erfindungsgemäß möglich.

Die erste und die zweite Abstandsmesseinrichtung 26 bzw. 28 ist in Fig. 1 lediglich schematisch dargestellt, ebenso wie die Röntgenquelle 30a und der Röntgendetektor 30b. Das genaue Funktionsprinzip der Abstandsmesseinrichtungen 26 bzw. 28. ist für die Anwendung des erfindungsgemäßen Konzepts nicht wesentlich. Vorteilhaft ist, wenn die Abstandsmesseinrichtung 26 und 28 mit einer Messung jeweils einen Abstand zu einem ausgedehnten geometrischen Bereich auf der ihnen jeweils zugeordneten Oberfläche des zu vermessenden Objekts 20 bestimmen können. Dies ist beispielsweise auf kostengünstige Art und Weise bei den anhand von Fig. 4 beschriebenen Lichtschnittmesseinrichtungen der Fall. Erfindungsgemäß wird also ein erster Abstand 32a zwischen einer der ersten Abstandsmesseinrichtung 26 zugeordneten ersten Hauptoberfläche des Objekts 20 und der ersten Abstandsmesseinrichtung 26 bestimmt. Ein zweiter Abstand 32b zwischen der zweiten Abstandsmesseinrichtung 28 und einer der zweiten Abstandsmesseinrichtung 28 zugewandten zweiten Hauptoberfläche des Objekts 20 wird mittels der zweiten Abstandsmesseinrichtung 28 bestimmt.

Als Referenzabstand wird die Dicke des Objekts in einem ausgewählten geometrischen Bereich des Objekts bestimmt. Dazu wird mittels des Röntgendetektors 30b die durch die Materialstärke des zu vermessenden Objekts 20 geschwächte Röntgenintensität bestimmt, die von der Röntgenquelle 30a emittiert wird. Durch Kenntnis des Absorptionsverhaltens des Materials des Objekts 20 kann somit auf die Dicke 22 des Objekts 20 geschlossen werden. Erfindungsgemäß sind Röntgenquelle 30a und Röntgendetektor 30b mit jeweils einer Abstandsmesseinrichtung verbunden, und die Dicke 22 des Objekts 20 wird von der Röntgenmesseinrichtung an einer Stelle der Oberfläche des Objekts 20 bestimmt, die ebenfalls von der Abstandsmessung der Abstandsmesseinrichtung 26 und 28 erfasst wird. Erfindungsgemäß kann also als Referenzabstand der Abstand zwischen der ersten und der zweiten Abstandsmesseinrichtung aus der Summe der Abstände 32a, 32b und der Dicke 22 berechnet werden.

Dies hat den großen Vorteil, dass die aufwändige Röntgentechnik nur an einem geometrisch stark begrenzten Teil der Oberfläche des Objekts 20 verwendet werden muss, um mit deren Hilfe den Abstand der beiden Abstandsmesseinrichtungen zueinander zu bestimmen, bzw. zeitlich zu verfolgen. Die erfindungsgemäße hohe Messgenauigkeit der Materialstärke des Objekts kann somit auch bei thermisch oder mechanisch verursachten Variationen des Abstands der beiden Abstandsmesseinrichtungen 26 und 28 aufrecht erhalten werden.

Bei der vorliegenden Erfindung wird die erzielbare Messgenauigkeit in Dickenrichtung dadurch zusätzlich erhöht, indem eine zweite radiometrische Messung mittels einer Röntgeneinrichtung durchgeführt wird, wobei die Röntgeneinrichtung mit der ersten Lichtschnittmesseinrichtung und der zweiten Lichtschnittmesseinrichtung verbunden ist. Erfolgt die Messung mit der zweiten Röntgeneinrichtung entlang einer anderen Röntgenrichtung als mittels der ersten Röntgeneinrichtung, also beispielsweise unter einem anderen Winkel relativ zur Oberfläche des zu untersuchenden Objekts, kann auf eine eventuelle Verkippung bzw. ein eventuelles geometrisches Misalignment der Lichtschnittmesseinrichtungen geschlossen werden. Dadurch lässt sich auf vorteilhafte Art und Weise die Messgenauigkeit zusätzlich steigern, indem zusätzlich zum Abstand der beiden Lichtschnittmesseinrichtungen auch eine Korrektur auf fehlerhafte relative Ausrichtung in einer weiteren Dimension der beiden Lichtschnittmesseinrichtungen zueinander durchgeführt werden kann.

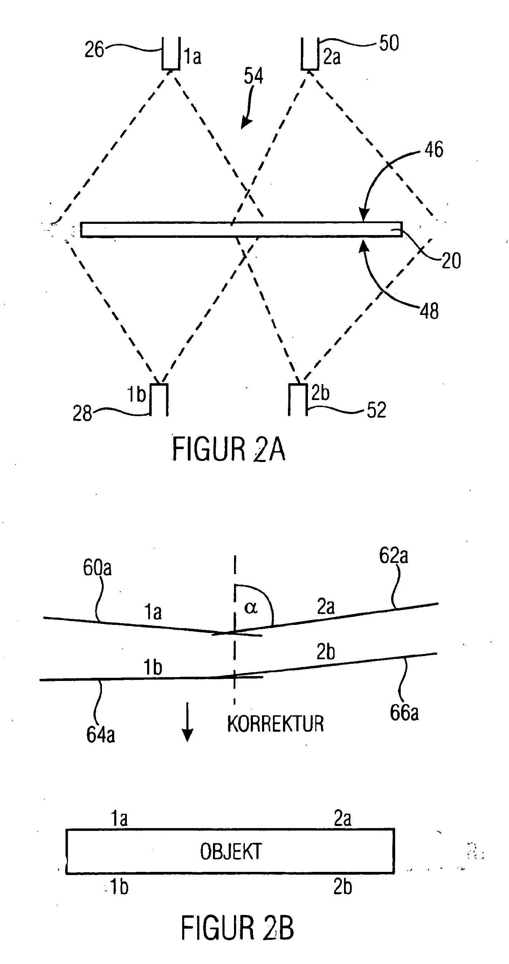

Die Fig. 2A und 2B zeigen weitere Ausführungsbeispiele zur Erfindung, bei denen das Objekt 20 räumlich so ausgedehnt ist, dass je Seite des Objekts zwei Lichtschnittmesseinrichtungen erforderlich sind, um Abstandsinformationen über die gesamte Breite des Objekts zu bestimmen. Daher sind zusätzlich zu der Lichtschnittmesseinrichtung 26, die einer ersten Hauptoberfläche 46 des Objekts 20 zugewandt ist und zu der zweiten Lichtschnittmesseinrichtung 28, die einer zweiten Hauptoberfläche 48 des Objekts 20 zugeordnet ist, eine dritte Lichtschnittmesseinrichtung 50 (2a) und eine vierte Lichtschnittmesseinrichtung 52 (2b) vorgesehen. Die dritte Lichtschnittmesseinrichtung 50 ist dabei der ersten Hauptoberfläche 46 und die vierte Lichtschnittmesseinrichtung 52 ist der zweiten Hauptoberfläche 48 zugewandt. Die Lichtebenen der ersten Lichtschnittmesseinrichtung 26 und der dritten Lichtschnittmesseinrichtung 50 sind durch die Geometrie der Anordnung derart festgelegt, dass diese sich in einem zentralen Überlappbereich 54 überschneiden. Gleiches gilt spiegelverkehrt für die zweite Lichtschnittmesseinrichtung 28 und die vierte Lichtschnittmesseinrichtung 52. Die Lichtebenen der zweiten Lichtschnittmesseinrichtung 28 und der vierten Lichtschnittmesseinrichtung 52 überlappen also ebenfalls innerhalb des zentralen Bereichs 54.

Zur Unterscheidung der unterschiedlichen Messlichtstreifen im Überlappbereich, der von zwei Lichtschnittmesseinrichtungen gleichzeitig beobachtet wird, können beispielsweise unterschiedliche Lichtwellenlängen mit korrespondierenden Wellenlängenfiltern verwendet werden. Prinzipiell sind auch andere Methoden denkbar, beispielsweise eine Feinstrukturierung der unterschiedlichen Messlichtstreifen, etwa indem der Messlichtstreifen in bestimmten Abständen unterbrochen ist, sodass eine Identifizierung über dieses Muster erreicht werden kann.

Wie im Folgenden nochmals beschrieben, ist es durch die Verwendung des Konzepts also möglich, die Dicke von Objekten zu bestimmen, welche eine geometrische Ausdehnung besitzen, die über die maximal mit einer einzigen Lichtschnittmesseinrichtung zugänglichen Breite hinausgeht. Anhand der Fig. 2B ist beispielhaft exemplarisch dargestellt, wie aus den Daten der vier in Fig. 2A gezeigten Lichtschnittmesseinrichtungen die Dicke des Objekts 20 über die gesamte Breite desselben bestimmt werden kann. Dabei sind in Fig. 2B zunächst für den vereinfachten Fall einer perfekt planaren Oberfläche die mittels der Sensoren der Lichtschnittmesseinrichtungen 26, 28, 50 und 52 erhaltenen Aufnahmen der Lichtmessstreifen schematisch dargestellt. Dabei ist das erste Lichtschnittaufnahmensegment 60a der ersten Lichtschnittmesseinrichtung 26, das Lichtschnittaufnahmensegment 62a der dritten Lichtschnittmesseinrichtung 50, das Lichtschnittaufnahmensegment 64a der zweiten Lichtschnittmesseinrichtung 28 und das Lichtschnittaufnahmensegment 66a der vierten Lichtschnittmesseinrichtung 52 zugeordnet. Die Lichtschnittaufnahmensegmente 60a, 62a, 64a und 66a sind also diejenigen Teile der Messlichtstreifen, die auf der Oberfläche des Objekts 20 erzeugt werden.

Im in Fig. 2B gezeigten Fall sind die Abweichungen, die sich durch eventuelle Schrägstellung bzw. Nicht-Parallelität der einzelnen Lichtschnittmesseinrichtungen ergeben können, übertrieben dargestellt, um das Verfahren bzw. das Konzept deutlicher zu machen.

Um aus den in Fig. 2B stilisiert gezeichneten Messlichtaufnahmen der einzelnen Messlichtstreifen die Dicke über die gesamte Breite des Objekts 20 bestimmen zu können, werden zunächst eventuelle Verkippungen der einzelnen Messlichteinrichtungen 26, 28, 50 oder 52 korrigiert. Dazu werden die Ergebnisse der ersten Lichtschnittmesseinrichtung 26 mit den Ergebnissen der dritten Lichtschnittmesseinrichtung 50 abgeglichen, d. h. ein Winkel α zwischen dem Messlichtaufnahmensegment 60a und dem Messlichtaufnahmensegment 62a wird so lange variiert, bis beide Messlichtaufnahmen 60a und 62a im Überlappbereich 54 im Wesentlichen identische Werte liefern. Das heißt, eine eventuelle Nicht-Parallelität der der ersten Lichtschnittmesseinrichtung zugeordneten Lichtebene und der der dritten Lichtschnittmesseinrichtung zugeordneten Lichtebene wird korrigiert. Dies kann beispielsweise durch einen Least-Square-Fit geschehen, der die quadratischen Fehler der Einzelmessungen zum durch Anpassung erzielten Wert der Lichtschnittaufnahmen im Überlappbereich 54 minimiert. Selbiges Verfahren wird für die zweite Lichtschnittmesseinrichtung 28 und die vierte Lichtschnittmesseinrichtung 52 durchgeführt, so dass sich nach Angleichung der unterschiedlichen Messköpfe ein in Fig. 2B gezeigtes Bild ergibt. Durch Bestimmung des Referenzabstands zwischen den einzelnen Lichtschnittmesseinrichtungen kann nun die Dicke des zu vermessenden Objekts 20 auf dessen Gesamtbreite bestimmt werden.

Obwohl in den Ausführungsbeispielen zur Erfindung der Fig. 2A und 2B das Konzept unter Verwendung von lediglich zwei Lichtschnittmesseinrichtungen pro Seite des zu vermessenden Objekts illustriert ist, können Beispiele von Messeinrichtungen auch mehr als zwei Lichtschnittmesseinrichtungen je Oberfläche aufweisen. Ist dies erforderlich, um die gesamte Breite des Objekts 20 abzudecken, kann ähnlich wie in Fig. 2A und 2B skizziert, vorgegangen werden. Die Dicke über die gesamte Breite des Objekts 20 ergibt sich dann analog zum oben beschriebenen Verfahren.

Zusammenfassend kann man also sagen, dass selbst wenn die Bahnbreite größer ist als diejenige Breite, die mit einer einzelnen Abstandsmesseinrichtung bzw. Anordnung von jeweils einem über und einem unter dem Bahnmaterial bzw. dem Objekt 20 angeordneten Lichtschnittdetektor abgedeckt werden kann, mehrere solche Anordnungen nebeneinander angeordnet werden können, um eine größere Breite abzudecken. Überlappen sich die Messbereiche der Anordnungen ausreichend, können jedoch Relativbewegungen und eine eventuelle Verkippung der Messköpfe senkrecht zur Vorschubrichtung korrigiert werden. Da ein Lichtschnittmesskopf nur Abstände erfasst, würde eine Verkippung eines Messkopfs ohne Korrektur zu falschen Dickenwerten führen.

Im letzten Schritt werden die Ergebnisse durch Vergleich mit den bekannten Dicken der Referenzobjekte abgeglichen. Nach diesem Schritt liegen für jeden Messpunkt Dickenwerte für das Bahnmaterial vor. Im in Fig. 2A und 2B gezeigten Fall wird zur vereinfachenden Darstellung angenommen, dass das Objekt 20 bzw. ein zu untersuchendes Bahnmaterial eine ebene Oberfläche aufweist. Ohne Beschränkung der Anwendbarkeit des erfindungsgemäßen Konzepts können jedoch erfindungsgemäß auch unebene Objekte vermessen werden, so beispielsweise Bleche, die in Vorschubrichtung gekrümmt sind bzw. Profilbleche, die ein dreieckiges bzw. quadratisches oder rechteckiges Profil aufweisen können.

Bei der radiometrischen Referenzmessung ist für je einander gegenüberliegender Lichtschnittmesseinrichtung, also für die Paare der Lichtschnittmesseinrichtungen 26 und 28 bzw. der Lichtschnittmesseinrichtungen 50 und 52 ein radiometrischer Sensor erforderlich.

Wie bereits anhand von Fig. 1 diskutiert, kann bei Verwendung solcher radiometrischer Verfahren (Strahlungsquelle und Strahlungsdetektor) gleichzeitig eine mögliche Verkippung der Lichtschnittmessköpfe korrigiert werden, da für jedes Paar einander gegenüberliegender Lichtschnittmesseinrichtungen zwei radiometrische Messeinrichtungen verwendet werden.

Wie im in Fig. 2A gezeigten Fall können auch bei Verwendung radiometrischer Detektoren zur Bestimmung der Referenzabstände mehr als zwei Lichtschnittmesseinrichtungen je Seite verwendet werden, wobei dann jede Lichtschnittmesseinrichtung zumindest eine radiometrische Messeinheit zur Bestimmung des ihm zugeordneten Referenzabstands aufweist.

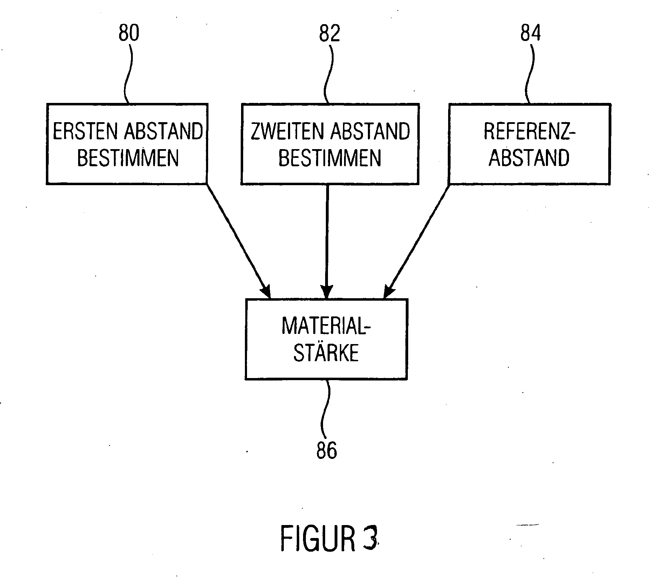

Anhand von Fig. 3 ist ein Ausführungsbeispiel zum erfindungsgemäßen Verfahren zum Bestimmen der Materialstärke eines Objekts schematisch in Form eines Blockdiagramms dargestellt. Zur Bestimmung der Materialstärke wird dabei zunächst in einem ersten Abstandsmessschritt 80 ein erster Abstand zwischen einer Abstandsmesseinrichtung und einer ersten Hauptoberfläche des Objekts bestimmt.

In einem zweiten Abstandsmessschritt 84 wird ein zweiter Abstand zwischen einer zweiten Abstandsmesseinrichtung und einer der ersten Hauptoberfläche gegenüberliegenden zweiten Hauptoberfläche des Objekts bestimmt.

In einem dritten Schritt 84 wird eine Information über einen Referenzabstand, der eine Bestimmung einer Abweichung eines tatsächlichen Abstands zwischen der ersten Abstandsmesseinrichtung (26) und der zweiten Abstandsmesseinrichtung (28) von einem Sollabstand erlaubt, bereitgestellt.

In einem Auswerteschritt 86 wird aus dem ersten Abstand, dem zweiten Abstand und dem Referenzabstand die Materialstärke des Objekts ermittelt.

Bei einem weiteren Ausführungsbeispiel zur Erfindung wird als Messlichtstreifen ein Lichtstreifen monochromatischen Lichts, beispielsweise Licht, das durch einen Laser erzeugt wird, verwendet.

Alternativ zur Verwendung von Laserlicht kann eine Weißlichtquelle zur Projektion einer Lichtlinie herangezogen werden, wobei die Referenzobjekte dann statisch angeordnet sein können.

Werden Lichtschnittmesseinrichtungen verwendet, kann die Vorschubgeschwindigkeit des Objekts 20 in der Vorschubrichtung 44 äußerst hoch gewählt werden, da Lichtschnittmesseinrichtungen hohe Messfrequenzen erlauben. Dadurch wird der Durchsatz stark erhöht. Eine hohe Vorschubgeschwindigkeit in Vorschubrichtung 44 verhindert zudem die Bildung von Speckle-Mustern auf der Oberfläche des Objektes, da diese sich dann während der Messdauer einer Messphase der Lichtschnittmesseinrichtungen herausmitteln. Die hohe mögliche Messfrequenz von Lichtschnittmessverfahren erlaubt es also Lichtmessstreifen mittels Laser zu projizieren, und sich eine daraus resultierende Erhöhung der Ortsauflösung zu Nutze zu machen.

Darüber hinaus kann durch Mittelung des Messsignals über mehrere Spuren des Sensors und durch zeitliche Filterung der Messdaten eine weitere Verbesserung der Genauigkeit der Dickenbestimmung erreicht werden, wenn Lichtschnittmessvorrichtungen verwendet werden. Dies ist möglich, da Lichtschnittsensoren selbst bei 1,5 m Breite des Lichtschnittmessstreifens eine Auflösung von 1 mm senkrecht zur Vorschubrichtung erlauben und die Messfrequenz von Lichtschnittsensoren wesentlich höher als die typischerweise erforderliche Zeitauflösung ist.

Als Abstandsmesseinrichtungen können andere Messeinrichtungen, als die in den Ausführungsbeispielen beschriebenen Lichtschnittmessverfahren verwendet werden. Hier kommen beispielsweise Laufzeitverfahren, wie Ultraschall-Echoverfahren oder Radar-Echoverfahren in Betracht, die beispielsweise Interferenzen der reflektierten und der ausgesendeten Signale verwenden können, um eine präzise Abstandsinformation zu erhalten.

## Patentansprüche

1. Messvorrichtung zur Bestimmung der Materialstärke eines Objekts, mit folgenden Merkmalen:
einer ersten Abstandsmesseinrichtung (26) zum Bestimmen eines ersten Abstands (32a) zwischen der ersten Abstandsmesseinrichtung (26) und einer der ersten Abstandsmesseinrichtung zugewandten ersten Hauptoberfläche (46) des Objekts (20) in Messrichtung;
einer zweiten Abstandsmesseinrichtung (28) zum Bestimmen eines zweiten Abstands (32b) zwischen der zweiten Abstandsmesseinrichtung (28) und einer der ersten Hauptoberfläche (46) gegenüberliegenden zweiten Hauptoberfläche (48) des Objekts (20) in Messrichtung;
einer bezüglich der ersten (26) und der zweiten Abstandsmesseinrichtung (28) in räumlich fester Orientierung und bekannter geometrischer Lage angeordneten ersten Röntgeneinrichtung (30a, 30b), um aus einer entlang einer Röntgenrichtung durch das Objekt (20) verursachten Abschwächung von Röntgenstrahlung auf eine erste Materialstärke des Objekts (20) in der Röntgenrichtung zu schließen;
einer mit der ersten (26) und der zweiten Abstandsmesseinrichtung (28) verbundenen und in einer räumlich festen weiteren Orientierung angeordneten zweiten Röntgeneinrichtung, um aus einer entlang einer zweiten Röntgenrichtung durch das Objekt verursachten Abschwächung von Röntgenstrahlung auf eine zweite Materialstärke des Objekts (20) entlang der zweiten Röntgenrichtung zu schließen;.und
einer Auswerteeinrichtung zum Bestimmen der Materialstärke (22) des Objekts (20) zwischen der ersten Hauptoberfläche (46) und der zweiten Hauptoberfläche (48) unter Verwendung des ersten Abstands (32a), des zweiten Abstands (32b) und der ersten Materialstärke wobei die Auswerteeinrichtung ausgebildet ist, aus der ersten und der zweiten Materialstärke auf eine relative räumliche Anordnung, insbesondere eine Verkippung, zwischen der ersten (26) und der zweiten Abstandsmesseinrichtung (28) zu schließen.

2. Messvorrichtung gemäß Patentanspruch 1, bei der die erste Abstandsmesseinrichtung und die zweite Abstandsmesseinrichtung ausgebildet sind, den ersten Abstand und den zweiten Abstand berührungslos zu bestimmen.

3. Messvorrichtung gemäß Patentanspruch 1 oder 2, bei der die Messrichtung zur ersten Hauptoberfläche (46) des Objekts (20) senkrecht ist.

4. Messvorrichtung gemäß einem der vorhergehenden Patentansprüche, bei der die Röntgeneinrichtung (30a, 30b) ausgebildet ist, die erste Materialstärke für einen in Messrichtung weniger ausgedehnten Oberflächenbereich als die Abstandsmesseinrichtungen zu bestimmen.

5. Messvorrichtung gemäß einem der vorhergehenden Patentansprüche, bei der die Röntgeneinrichtung bezüglich der ersten (26) und der zweiten Abstandsmesseinrichtung derart angeordnet ist, dass die Röntgenrichtung parallel zur Messrichtung verläuft.

6. Messvorrichtung gemäß einem der vorhergehenden Ansprüche, bei der die erste Abstandsmesseinrichtung eine erste Lichtschnittmesseinrichtung mit einer ersten Einrichtung zum Erzeugen eines ersten Messlichtstreifens (42a, 42b, 42c) auf der ersten Hauptoberfläche (46) des Objekts (20) umfasst; und die zweite Abstandsmesseinrichtung (28) eine zweite Lichtschnittmesseinrichtung mit einer zweiten Einrichtung zum Erzeugen eines zweiten Messlichtstreifens auf der zweiten Hauptoberfläche des Objekts (20) umfasst.

7. Messvorrichtung gemäß Patentanspruch 6, bei der die erste Einrichtung zum Erzeugen eines ersten Messlichtstreifens und die zweite Einrichtung zum Erzeugen eines zweiten Messlichtstreifens je einen Laser umfassen.

8. Messvorrichtung gemäß Patentanspruch 6, bei der die ersten Einrichtung zum Erzeugen eines ersten Messlichtstreifens und die zweite Einrichtung zum Erzeugen eines zweiten Messlichtstreifens je eine Weisslichtquelle umfassen.

9. Messvorrichtung gemäß einem der Patentansprüche 6 bis 8, bei der die erste Einrichtung zum Erzeugen eines ersten Messlichtstreifens und die zweite Einrichtung zum Erzeugen eines zweiten Messlichtstreifens so angeordnet sind, dass sich der erste Messlichtstreifen (42a, 42b, 42c) und der zweite Messlichtstreifen auf einander gegenüberliegenden Hauptoberflächen des Objekts (20) gegenüberliegen.

10. Messvorrichtung gemäß einem der Patentansprüche 6 bis 9, bei der die erste Abstandsmesseinrichtung (26) eine dritte Lichtschnittmesseinrichtung (50) mit einer dritten Einrichtung zum Erzeugen eines dritten Messlichtstreifens auf der ersten Hauptoberfläche des Objekts (20) umfasst; und
die zweite Abstandsmesseinrichtung (28) eine vierte Lichtschnittmesseinrichtung (52) mit einer vierten Einrichtung zum Erzeugen eines vierten Messlichtstreifens auf der zweiten Hauptoberfläche des Objekts (20) umfasst, wobei von der ersten Einrichtung zum Erzeugen eines Messlichtstreifens und von der dritten Einrichtung zum Erzeugen eines dritten Messlichtstreifens auf der ersten Hauptoberfläche des Objekts (20) erzeugte Messlichtstreifen sich in einem Überlappbereich auf der ersten Hauptoberfläche des Objekts räumlich überlappen, und wobei von der zweiten Einrichtung zum Erzeugen des zweiten Messlichtstreifens und von der vierten Einrichtung zum Erzeugen des vierten Messlichtstreifens auf der zweiten Hauptoberfläche des Objekts (20) erzeugte Messlichtstreifen sich in einem Überlappbereich auf der zweiten Hauptoberfläche des Objekts (20) räumlich überlappen.

11. Messvorrichtung gemäß Patentanspruch 10, bei der die Auswerteeinrichtung ausgebildet ist, eine Abstandsinformation der ersten und der dritten Lichtschnittmesseinrichtung im Überlappbereich aufeinander anzupassen um eine angepasste Abstandsinformation zu erhalten, so dass die erste und die dritte Lichtschnittmesseinrichtung im Überlappbereich eine Abweichung zur angepassten Abstandsinformation aufweisen, die innerhalb eines vorbestimmten Toleranzbereichs liegt.

12. Verfahren zur Bestimmung der Materialstärke eines Objekts, mit folgenden Schritten:
Bestimmen eines ersten Abstands zwischen einer ersten Abstandsmesseinrichtung und einer der ersten Abstandsmesseinrichtung zugewandten ersten Hauptoberfläche des Objekts in Messrichtung;
Bestimmen eines zweiten Abstands zwischen einer zweiten Abstandsmesseinrichtung und einer der ersten Hauptoberfläche gegenüberliegenden zweiten Hauptoberfläche des Objekts in Messrichtung;
Bestimmen einer ersten Materialstärke des Objekts aus einer entlang einer ersten Röntgenrichtung durch das Objekt verursachten Abschwächung von Röntgenstrahlung in der Röntgenrichtung;
Bestimmen einer zweiten Materialstärke des Objekts aus einer entlang einer zweiten Röntgenrichtung, die sich von der ersten Röntgenrichtung unterscheidet, durch das Objekt verursachten Abschwächung von Röntgenstrahlung in der zweiten Röntgenrichtung;
Bestimmen einer relativen räumlichen Anordnung, insbesondere einer Verkippung, zwischen der ersten (26) und der zweiten Abstandsmesseinrichtung (28) aus der ersten und der zweiten Materialstärke; und
Bestimmen der Materialstärke des Objekts in Messrichtung zwischen der ersten Hauptoberfläche und der zweiten Hauptoberfläche unter Verwendung des ersten Abstands, des zweiten Abstands und der ersten Materialstärke.

13. Verfahren gemäß Patentanspruch 12, in dem der erste Abstand, der zweite Abstand berührungslos ermittelt werden.

## Claims

1. A measuring apparatus for determining the material strength of an object, comprising:
a first distance measuring means (26) for determining a first distance (32a) between the first distance measuring means (26) and a first main surface (46) of the object (20) facing the first distance measuring means in measurement direction;
a second distance measuring means (28) for determining a second distance (32b) between the second distance measuring means (28) and a second main surface (48) of the object (20) opposing the first main surface (46) in measurement direction;
a first X-ray means (30a, 30b) arranged in a spatially stationary orientation and known geometrical position with regard to the first (26) and the second distance measuring means (28) for inferring a first material strength of the object (20) along the X-ray direction from an attenuation of X-radiation caused by the object (20) along an X-ray direction;
a second X-ray means connected to the first (26) and the second distance measuring means (28) and arranged in a further spatially stationary orientation for inferring a second material strength of the object (20) along the second X-ray direction from an attenuation of X-radiation caused by the object (20) along a second X-ray direction; and
an evaluation means for determining the material strength (22) of the object (20) between the first main surface (46) and the second main surface (48) by using the first distance (32a), the second distance (32b) and the first material strength, wherein the evaluation means is implemented to infer a relative spatial arrangement, in particular a tilting, between the first (26) and the second (28) distance measuring means (28) from the first and second material strengths.

2. The measuring apparatus according to claim 1, wherein the first distance measuring means and the second distance measuring means are implemented to determine the first distance and the second distance in a contactless manner.

3. The measuring apparatus according to claim 1 or 2, wherein the measurement direction is perpendicular to the first main surface (46) of the object (20).

4. The measuring apparatus according to one of the previous claims, wherein the X-ray means (30a, 30b) is implemented to determine the first material strength for a surface area less extended then the distance measuring means in the measurement direction.

5. The measuring apparatus according to one of the previous claims, wherein the X-ray means is arranged with regard to the first (26) and the second distance measuring means such that the X-ray direction runs parallel to the measurement direction.

6. The measuring apparatus according to one of the previous claims, wherein the first distance measuring means comprises a first light-slit measuring means having a first means for generating a first measuring light strip (42a, 42b, 42c) on the first main surface (46) of the object (20); and the second distance measuring means (28) comprises a second light-slit measuring means having a second means for generating a second measuring light strip on the second main surface of the object (20).

7. The measuring apparatus according to claim 6, wherein the first means for generating a first measuring light strip and the second means for generating a second measuring light strip each comprise one laser.

8. The measuring apparatus according to claim 6, wherein the first means for generating a first measuring light strip and the second means for generating a second measuring light strip each comprise one white light source.

9. The measuring apparatus according to one of claims 6 to 8, wherein the first means for generating a first measuring light strip and the second means for generating a second measuring light strip are arranged such that the first measuring light strip (42a, 42b, 42c) and the second measuring light strip oppose on opposing main surfaces of the object (20).

10. The measuring apparatus according to one of claims 6 to 9, wherein the first distance measuring means (26) comprises a third light-slit measuring means (50) having a third means for generating a third measuring light strip on the first main surface of the object (20); and
the second distance measuring means (28) comprises a fourth light-slit measuring means (52) having a fourth means for generating a fourth measuring light strip on the second main surface of the object (20), wherein measuring light strips generated by the first means for generating a measuring light strip and by the third means for generating a third measuring light strip on the first main surface of the object spatially overlap in an overlapping area on the first main surface of the object, and wherein measuring light strips generated by the second means for generating the second measuring light strip and by the fourth means for generating the fourth measuring light strip on the second main surface of the object (20) spatially overlap in an overlapping area on the second main surface of the object (20).

11. The measuring apparatus according to claim 10, wherein the evaluation means is implemented to adapt distance information of the first and third light-slit measuring means in the overlapping area to each other for obtaining adapted distance information, so that the first and third light-slit measuring means show a deviation from the adapted distance information in the overlapping area that lies within a predetermined tolerance range.

12. A method for determining the material strength of an object, comprising:
determining a first distance between a first distance measuring means and a first main surface of the object facing the first distance measuring means in measurement direction;
determining a second distance between a second distance measuring means and a second main surface of the object opposing the first main surface in measurement direction;
determining a first material strength of the object from an attenuation of X-radiation in a first X-ray direction caused along the X-ray direction by the object;
determining a second material strength of the object from an attenuation of X-radiation in a second X-ray direction differing from the first X-ray direction caused along the second X-ray direction, said attenuation being caused by the object;
determining a relative spatial arrangement, in particular a tilting, between the first (26) and the second (28) distance measuring means from the first and second material strengths; and
determining the material strength of the object in measurement direction between the first main surface and the second main surface by using the first distance, the second distance and the determined relative spatial arrangement between the first (26) and the second (28) distance measuring means.

13. The method according to claim 12, wherein the first distance, the second distance are determined in a contactless manner.

## Revendications

1. Dispositif de mesure pour déterminer l'épaisseur de matériau d'un objet, aux caractéristiques suivantes:
un premier moyen de mesure de distance (26) destiné à déterminer une première distance (32a) entre le premier moyen de mesure de distance (26) et une première surface principale (46) de l'objet (20) tournée vers le premier moyen de mesure de distance dans la direction de mesure;
un deuxième moyen de mesure de distance (28) destiné à déterminer une deuxième distance (32b) entre le deuxième moyen de mesure de distance (28) et une deuxième surface principale (48) de l'objet (20) opposée à la première surface principale (46) dans la direction de mesure;
un premier moyen de radiographie (30a, 30b) disposé selon une orientation spatialement fixe et en une position géométrique connue par rapport au premier (26) et au deuxième moyen de mesure de distance (28), pour déduire, à partir d'un affaiblissement des rayonnements X provoqué par l'objet (20) dans une direction des rayons X, une première épaisseur de matériau de l'objet (20) dans la direction des rayons X;
un deuxième moyen de radiographie relié au premier (26) et au deuxième moyen de mesure de distance (28) et disposé selon une autre orientation spatialement fixe, pour déduire, à partir d'un affaiblissement des rayonnements X provoqué par l'objet dans une deuxième direction des rayons X, une deuxième épaisseur de matériau de l'objet (20) dans la deuxième direction des rayons X; et
un moyen d'évaluation destiné à déterminer l'épaisseur de matériau (22) de l'objet (20) entre la première surface principale (46) et la deuxième surface principale (48) à l'aide de la première distance (32a), de la deuxième distance (32b) et de la première épaisseur de matériau, le moyen d'évaluation étant réalisé de manière à déduire, à partir de la première et de la deuxième épaisseur de matériau, une disposition spatiale relative, en particulier un basculement, entre le premier (26) et le deuxième moyen de mesure de distance (28).

2. Dispositif de mesure selon la revendication 1, dans lequel le premier moyen de mesure de distance et le deuxième moyen de mesure de distance sont réalisés de manière à déterminer sans contact la première distance et la deuxième distance.

3. Dispositif de mesure selon la revendication 1 ou 2, dans lequel la direction de mesure est perpendiculaire à la première surface principale (46) de l'objet (20).

4. Dispositif de mesure selon l'une des revendications précédentes, dans lequel le moyen de rayonnement X (30a, 30b) est réalisé de manière à déterminer la première épaisseur de matériau pour une zone de surface moins étendue, dans la direction de mesure, que les moyens de mesure de distance.

5. Dispositif de mesure selon l'une des revendications précédentes, dans lequel le moyen de rayonnement X est disposé par rapport au premier (26) et au deuxième moyen de mesure de distance de sorte que la direction des rayons X s'étende parallèlement à la direction de mesure.

6. Dispositif de mesure selon l'une des revendications précédentes, dans lequel le premier moyen de mesure de distance comporte un premier moyen de mesure par coupe optique avec un premier moyen destiné à générer une première bande de lumière de mesure (42a, 42b, 42c) sur la première surface principale (46) de l'objet (20); et le deuxième moyen de mesure de distance (28) comporte un deuxième moyen de mesure par coupe optique avec un deuxième moyen destiné à générer une deuxième bande de lumière de mesure sur la deuxième surface principale de l'objet (20).

7. Dispositif de mesure selon la revendication 6, dans lequel le premier moyen destiné à générer une première bande de lumière de mesure et le deuxième moyen destiné à générer une deuxième bande de lumière de mesure comportent, chacun, un laser.

8. Dispositif de mesure selon la revendication 6, dans lequel le premier moyen destiné à générer une première bande de lumière de mesure et le deuxième moyen destiné à générer une deuxième bande de lumière de mesure comportent, chacun, une source de lumière blanche.

9. Dispositif de mesure selon l'une des revendications 6 à 8, dans lequel le premier moyen destiné à générer une première bande de lumière de mesure et le deuxième moyen destiné à générer une deuxième bande de lumière de mesure sont disposés de sorte que la première bande de lumière de mesure (42a, 42b, 42c) et la deuxième bande de lumière de mesure sont opposées l'une à l'autre sur des surfaces principales opposées de l'objet (20).

10. Dispositif de mesure selon l'une des revendications 6 à 9, dans lequel le premier moyen de mesure de distance (26) comporte un troisième moyen de mesure par coupe optique (50) avec un troisième moyen destiné à générer une troisième bande de lumière de mesure sur la première surface principale de l'objet (20); et
le deuxième moyen de mesure de distance (28) comporte un quatrième moyen de mesure par coupe optique (52) avec un quatrième moyen destiné à générer une quatrième bande de lumière de mesure sur la deuxième surface principale de l'objet (20), les bandes de lumière de mesure générées par le premier moyen destiné à générer une bande de lumière de mesure et par le troisième moyen destiné à générer une troisième bande de lumière de mesure sur la première surface principale de l'objet (20) se chevauchant spatialement dans une zone de recouvrement sur la première surface principale de l'objet, et les bandes de lumière de mesure générées par le deuxième moyen destiné à générer la deuxième bande de lumière de mesure et par le quatrième moyen destiné à générer la quatrième bande de lumière de mesure sur la deuxième surface principale de l'objet (20) se chevauchant spatialement dans une zone de recouvrement sur la deuxième surface principale de l'objet (20).

11. Dispositif de mesure selon la revendication 10, dans lequel le moyen d'évaluation est réalisé de manière à adapter l'une à l'autre une information de distance du premier et du troisième moyen de mesure par coupe optique dans la zone de recouvrement, pour obtenir une information de distance adaptée, de sorte que le premier et le troisième moyen de mesure par coupe optique présentent, dans la zone de recouvrement, un écart par rapport à l'information de distance adaptée qui se situe dans une plage de tolérance prédéterminée.

12. Procédé pour déterminer l'épaisseur de matériau d'un objet, aux étapes suivantes consistant à:
déterminer une première distance entre un premier moyen de mesure de distance et une première surface principale de l'objet tournée vers le premier moyen de mesure de distance dans une direction de mesure;
déterminer une deuxième distance entre un deuxième moyen de mesure de distance et une deuxième surface principale de l'objet opposée à la première surface principale dans la direction de mesure;
déterminer une première épaisseur de matériau de l'objet à partir d'un affaiblissement du rayonnement X provoqué, dans une première direction de rayons X, par l'objet dans la direction des rayons X;
déterminer une deuxième épaisseur de matériau de l'objet à partir d'un affaiblissement du rayonnement X provoqué, dans une deuxième direction de rayons X différente de la première direction des rayons X, par l'objet dans la deuxième direction des rayons X;
déterminer une disposition spatiale relative, en particulier un basculement, entre le premier (26) et le deuxième moyen de mesure de distance (28) à partir de la première et de la deuxième épaisseur de matériau; et
déterminer l'épaisseur de matériau de l'objet dans la direction de mesure entre la première surface principale et la deuxième surface principale à l'aide de la première distance, de la deuxième distance et de la première épaisseur de matériau.

13. Procédé selon la revendication 12, dans lequel la première distance, la deuxième distance sont déterminées sans contact.
